# EUROPÄISCHE PATENTSCHRIFT

(11) **EP 2 317 212 B1**
(45) Veröffentlichungstag und Bekanntmachung des Hinweises auf die Patenterteilung: **18.02.2015**
(21) Anmeldenummer: 10013485.7
(22) Anmeldetag: 09.10.2010
(51) Int. Cl.: F21S 8/10, F21V 8/00, F21Y 101/02, F21W 101/02, F21S 8/12

(54) **Beleuchtungseinrichtung für ein Kraftfahrzeug**
Lighting device for a motor vehicle
Dispositif d'éclairage pour un véhicule automobile

(30) Priorität: 03.11.2009 DE 102009052339
(43) Veröffentlichungstag der Anmeldung: 04.05.2011
(73) Patentinhaber: Automotive Lighting Reutlingen GmbH, 72762 Reutlingen (DE)
(72) Erfinder: Zwick, Hubert, 70173 Stuttgart (DE)
(74) Vertreter: DREISS Patentanwälte PartG mbB

(56) Entgegenhaltungen:
- DE-A1- 10 311 317
- DE-A1- 19 831 002
- DE-A1-102008 016 764
- US-A1- 2002 036 905

## Beschreibung

Die Erfindung betrifft eine Beleuchtungseinrichtung nach dem Oberbegriff des Anspruchs 1. Eine solche Beleuchtungseinrichtung ist aus der US 2002/036 905 A1 bekannt.

Eine solche Beleuchtungseinrichtung ist auch in der DE 10 2008 016 764 beschrieben. Ist der Lichtleiter dieser Beleuchtungseinrichtung relativ stark gebogen und/oder sind die ersten Auskoppelelemente mitsamt der ihnen zugeordneten Reflektoren relativ dicht gepackt an dem Lichtleiter angeordnet, dann besteht die Gefahr, dass Lichtstrahlen in eine unerwünschte Richtung abgelenkt oder innerhalb der Beleuchtungseinrichtung absorbiert werden. Denn es kann ein Lichtstrahl, der von einem Reflektor reflektiert worden ist, auf eine Rückseite eines benachbarten Reflektors auftreffen, sodass der Lichtstrahl nicht ungehindert erneut durch den Lichtleiter durchtreten kann. Insgesamt weist die Beleuchtungseinrichtung deshalb bei stark gebogenen Lichtleitern bzw. bei dicht gepackt angeordneten ersten Auskoppelelementen einen relativ geringen Wirkungsgrad auf. Das heißt von Licht, das in den Lichtleiter eingekoppelt wird, wird ein relativ geringer Anteil gemäß einer gewünschten vorgegebenen Lichtverteilung abgegeben.

Aufgabe der vorliegenden Erfindung ist es, eine Beleuchtungseinrichtung bereit zu stellen, die insbesondere bei dicht beieinander angeordneten Auskoppelelementen und/oder bei relativ stark gebogenem Lichtleiter einen hohen Wirkungsgrad aufweist.

Diese Aufgabe wird durch eine Beleuchtungseinrichtung mit den Merkmalen des Anspruchs 1 gelöst.

Die erfindungsgemäße Beleuchtungseinrichtung zeichnet sich dadurch aus, dass das erste Auskoppelelement an einer ersten Seite des Lichtleiters angeordnet ist und das zweite Auskoppelelement an einer zweiten Seite des Lichtleiters angeordnet ist, die der ersten Seite gegenüber liegt.

Erfindungsgemäß ist vorgesehen, dass der Lichtleiter zumindest abschnittsweise derart gebogen ist, dass ein Winkel der zweiten Seite bezogen auf eine Hauptlichtabgaberichtung entlang einer Längsachse des Lichtleiters, das heißt in Längserstreckungsrichtung des Lichtleiters, variiert. Der Lichtleiter kann also - sofern er plattenförmig realisiert ist - insgesamt die Form einer gebogenen Platte aufweisen.

Bei der Erfindung befindet sich das erste Auskoppelelement in einem ersten Abschnitt des Lichtleiters und das zweite Auskoppelelement in einem zweiten Abschnitt des Lichteiters, wobei der Winkel innerhalb des ersten Abschnitts größer ist als innerhalb des zweiten Abschnitts. Das heißt, die ersten Auskoppelelemente sind vorzugsweise an einem Bereich des vorzugsweise plattenförmigen Lichtleiters angeordnet, an dem dessen Grundflächen und die Hauptlichtabgaberichtung einen vergleichsweise großen Winkel einschließen oder. sogar orthogonal zueinander sind. Dahingegen sind die zweiten Auskoppelelemente vorzugsweise an einem Bereich des Lichtleiters angeordnet, an dem die Grundflächen und die Hauptlichtabgaberichtung einen vergleichsweise geringen Winkel einschließen oder annähernd parallel zueinander verlaufen. Dieser Ausführungsform liegt die Erkenntnis zugrunde, dass das Licht, das in beiden Fällen unter annähernd gleichen Winkeln aus dem Lichtleiter auskoppelt, in dem Fall, dass die Auskoppeleinrichtung annähernd der gewünschten Lichtrichtung entspricht, nicht mehr mittels eines Reflektors umgelenkt werden muss, sondern dass geringe Lichtrichtungsänderungen mittels der Form des direkt auskoppelnden Elements erreicht werden können, was in dem Fall, dass der Lichtleiter zur gewünschten Lichtrichtung einen großen Winkel aufweist, nicht mehr möglich ist, weshalb in diesem Fall ein Reflektor benötigt wird. Es kann also mittels des ersten Auskoppelelements Licht besonders effektiv in einem kleinen Winkel (bezogen auf eine Normale an der entsprechenden Seite des Lichtleiters) aus dem Lichtleiter ausgekoppelt werden, wohingegen sich das zweite Auskoppelelement besonders zum Auskoppeln des Lichts aus dem Lichtleiter in einem relativ großen Winkel eignet.

Der Lichtleiter kann aus beliebigem transparenten Material gebildet sein. Bevorzugt ist jedoch Kunststoffmaterial, insbesondere Polymethylmethacrylat (PMMA), aus dem der Lichtleiter einfach mittels Spritzgießen in großen Stückzahlen hergestellt werden kann. vorzugsweise handelt es sich beim Lichtleiter, den ersten Auskoppelelementen und den zweiten Auskoppelelementen um ein einziges, beispielsweise mittels Spritzgießen hergestelltes Bauteil. Weiter ist bevorzugt, dass der Lichtleiter insgesamt plattenförmig ist, wobei die ersten und die zweiten Auskoppelelemente an den Oberflächen dieser Platte angeordnet sind.

Bezüglich einer Hauptlichtabgaberichtung ist die zweite Seite vorzugsweise vor der ersten Seite angeordnet. Das heißt, die zweite Seite ist einem Betrachter, der entgegen der Hauptlichtabgaberichtung auf den Lichtleiter blickt, zugewandt.

Es ist bevorzugt, dass der Lichtleiter eine erste Einkoppelfläche zum Einkoppeln von Licht, das über eine erste Auskoppelfläche des ersten Auskoppelelements auskoppelbar ist, und/oder eine zweite Einkoppelfläche zum Einkoppeln von Licht, das über eine zweite Auskoppelfläche des zweiten Auskoppelelements auskoppelbar ist, aufweist, wobei die beiden Einkoppelflächen bezüglich der Längsachse des Lichtleiters, das heißt in Längserstreckungsrichtung des Lichtleiters, zueinander versetzt sind. In anderen Worten ist dem mindestens einem ersten Auskoppelelement die erste Einkoppelfläche und dem mindestens einem zweiten Auskoppelelement die zweite Einkoppelfläche zugeordnet. Im Falle des plattenförmigen Lichtleiters hat dies zur Folge, dass diejenigen Lichtstrahlen, die über das erste Auskoppelelement ausgekoppelt werden, und diejenigen Lichtstrahlen, die über das zweite Auskoppelelement ausgekoppelt werden, innerhalb des Lichtleiters jeweils in entgegengesetzten Richtungen verlaufen.

Was die Ausgestaltung des zweiten Auskoppelelements betrifft, kann vorgesehen werden, dass das die zweite Auskoppelfläche zumindest im Wesentlichen orthogonal zu der zweiten Seite des Lichtleiters verläuft. Hierbei ist denkbar, dass das zweite Auskoppelelement die Form eines Quaders, insbesondere eines Würfels, aufweist.

Abweichend hiervon kann die zweite Auskoppelfläche auch bezüglich der Lichtausbreitungsrichtung innerhalb des Lichtleiters nach hinten geneigt sein. Das heißt, es ist bevorzugt, dass die zweite Auskoppelfläche gegenüber der zweiten Seite des Lichtleiters derart geneigt ist, dass die zweite Auskoppelfläche und die zweite Seite außerhalb des Lichtleiters einen stumpfen Winkel einschließen. Hierdurch kann erreicht werden, dass ein über die zweite Auskoppelfläche ausgekoppeltes Lichtbündel einen relativ geringen Öffnungswinkel aufweist.

Es kann vorgesehen werden, dass zumindest ein Abschnitt der Auskoppelfläche gegenüber einer zur zweiten Seite des Lichtleiters und zu einer Lichtausbreitungsrichtung im Lichtleiter und/oder der Längsachse des Lichtleiters orthogonalen Querebene des Lichtleiters geneigt ist. Mittels des solchermaßen geneigten Abschnitts kann das Licht in eine Richtung schräg zu einer Längsebene des Lichtleiters, durch die die Längsachse des Lichtleiters verläuft und die orthogonal zur zweiten Seite des Lichtleiters ist, abgelenkt werden.

Hierbei ist besonders bevorzugt, dass die zweite Auskoppelfläche eine pfeilartige Form aufweist, das heißt, dass zwei an einer konvexen Vorderkante der Auskoppelfläche aneinander angrenzende Abschnitte in zueinander entgegengesetzten Richtungen gegenüber der Querebene geneigt sind. Die Vorderkante bildet also eine Pfeilspitze dieser pfeilartigen Form.

Anstatt die zweite Auskoppelfläche bzw. den Abschnitt der Auskoppelfläche eben auszubilden kann vorgesehen werden, dass die zweite Auskoppelfläche bzw. der Abschnitt eine insgesamt unebene Form zum Beeinflussen der Richtung von über die zweite Auskoppelfläche auszukoppelnden Lichtstrahlen und/oder zum Beeinflussen eines Öffnungswinkels eines von den auszukoppelnden Lichtstrahlen gebildeten Strahlenbündels aufweist. Bei der Form der zweiten Auskoppelfläche kann es sich um eine Freiform handeln, die beispielsweise mittels rechnergestützten Methoden ermittelt worden ist.

Es hat sich als besonders vorteilhaft herausgestellt, dass die insgesamt unebene zweite Auskoppelfläche aus mehreren nebeneinander angeordneten ebenen und rechteckigen Flächenelemente gebildet ist, wobei ein Neigungswinkel zumindest eines dieser Flächenelemente bezogen auf eine eine Tangentialebene der zweiten Seite an einer Kante, an der die Auskoppelfläche an die zweite Seite grenzt, sich von einem entsprechenden Neigungswinkel zumindest eines anderen Flächenelements unterscheidet. Hierdurch kann eine gewünschte Lichtverteilung des über die zweite Auskoppelfläche auszukoppelnden Lichts, insbesondere der Öffnungswinkel des über die zweite Auskoppelfläche auszukoppelnden Lichts, innerhalb einer zur Längsebene des Lichtleiters parallelen Ebene erzielt werden.

Hierbei ist bevorzugt, dass der Neigungswinkel der einzelnen Flächenelemente, mit zunehmenden Abstand zu der zweiten Seite abnimmt, sodass das Auskoppelelement an der Auskoppelfläche insgesamt eine konvexe Form aufweist.

Weiter ist bevorzugt, dass die zweite Auskoppelfläche aus einer derart hohen Anzahl der nebeneinander angeordneten Flächenelemente konstruiert ist, dass die hergestellte zweite Auskoppelfläche zumindest annähernd eine glatte, kantenfreie Form aufweist. Das heißt die zweite Auskoppelfläche ist zwar als eine Folge nebeneinander angeordneter ebener Flächenelemente konstruiert, jedoch ergibt sich aufgrund der verwendeten Herstellungsverfahren zum Herstellen des Lichtleiters bzw. des zweiten Auskoppelelements und der Eigenschaften des Materials, aus dem der Lichtleiter hergestellt ist, beim Herstellen der zweiten Auskoppelfläche die glatte, kantenfreie Form.

Weitere Merkmale und Vorteile der Erfindung ergeben sich aus der nachfolgenden Beschreibung, in welcher exemplarische Ausführungsformen der Erfindung anhand der Zeichnungen näher erläutert werden. Dabei zeigen:
- Figur 1: eine Draufsicht auf eine Beleuchtungseinrichtung gemäß einer ersten Ausführungsform;
- Figur 2: eine Draufsicht auf einen Ausschnitt eines Lichtleiters der Beleuchtungseinrichtung aus Figur 1;
- Figur 3: ein Detail der Darstellung aus Figur 2;
- Figur 4: eine Draufsicht auf einen Ausschnitt eines Lichtleiters der Beleuchtungseinrichtung gemäß einer zweiten bevorzugten Ausführungsform;
- Figur 5: ein Detail der Darstellung aus Figur 4;
- Figur 6: eine Seitenansicht eines Ausschnitts eines Lichtleiters einer Beleuchtungseinrichtung gemäß einer dritten bevorzugten Ausführungsform;
- Figur 7: eine Draufsicht auf einen Ausschnitt eines Lichtleiters einer Beleuchtungseinrichtung gemäß einer vierten bevorzugten Ausführungsform;
- Figur 8: Darstellung des Verlaufs von Lichtstrahlen in einem Auskoppelelement;
- Figur 9: Darstellung des Verlaufs von Lichtstrahlen in einem Flächenelement des Auskoppelelements; und
- Figur 10: eine perspektivische Ansicht einer Beleuchtungseinrichtung gemäß einer fünften bevorzugten Ausführungsform.

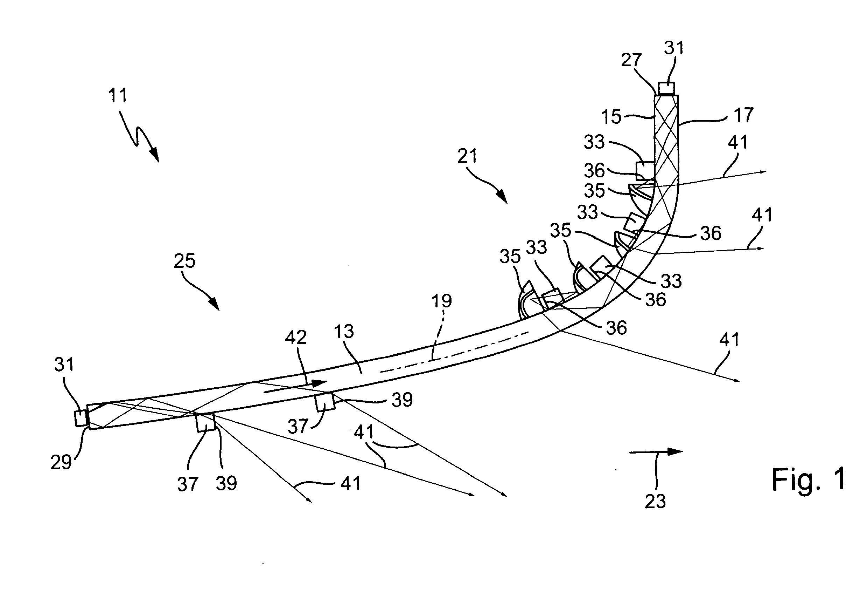

Figur 1 zeigt eine Kraftfahrzeugbeleuchtungseinrichtung 11. Bei der Beleuchtungseinrichtung 11 kann es sich beispielsweise um einen Kraftfahrzeugscheinwerfer oder eine Kraftfahrzeugleuchte, insbesondere um eine Heckleuchte, handeln. Die Beleuchtungseinrichtung 11 weist einen gebogenen, insgesamt plattenförmigen Lichtleiter 13 auf. Der Lichtleiter 13 weist eine im Wesentlichen konstante Dicke auf, sodass eine erste Seite 15 des Lichtleiters 13 parallel zu einer zweiten Seite 17 des Lichtleiters 13 verläuft. Die beiden Seiten 15, 17 verlaufen wiederum parallel zu einer Längsachse 19 (in Figur 1 der Übersichtlichkeit halber abschnittsweise dargestellt) des Lichtleiters 13. Abweichend von der gezeigten Ausführungsform kann der Lichtleiter 13 auch eine entlang seiner Längsachse 19 variierende Dicke aufwiesen, sodass die beiden Seiten 15, 17 nicht parallel zueinander sind.

An einem ersten Abschnitt 21 des Lichtleiters 13 sind die beiden Seiten 15, 17 und die Längsachse 19 des Lichtleiters 13 relativ stark gegenüber einer Hauptlichtabgaberichtung (Pfeil 23) geneigt, wohingegen diese Neigung gegenüber der Hauptlichtabgaberichtung 23 in einem zweiten Abschnitt 25 des Lichtleiters 13 im Vergleich zum ersten Abschnitt 21 gering ist. Der Lichtleiter 13 ist an seinem ersten Abschnitt 21 von einer ersten Einkoppelfläche 27 und an seinem zweiten Abschnitt 25 von einer zweiten Einkoppelfläche 29 begrenzt. Die beiden Einkoppelflächen 27, 29 sind von zwei in Längsrichtung des Lichtleiters 13, das heißt bezüglich der Längsachse 19, gegenüberliegenden Querseiten des Lichtleiters 13 gebildet. Die Einkoppelflächen 27, 29 sind bevorzugt als ebene Flächen ausgebildet. Sie können bei Bedarf aber auch an die Lichtverteilung der Lichtquelle angepasst werden und eine von einer ebenen Fläche abweichende Form aufweisen. Man erkennt, dass die Neigung der beiden Seiten 15, 17 entlang der Längsachse 19 in Richtung von der ersten Einkoppelfläche 27 hin zur zweiten Einkoppelfläche 29 kontinuierlich abnimmt, was zu einer im Längsschnitt insgesamt gebogenen Form des Lichtleiters 13 führt.

An jeder Einkoppelfläche 27, 29 ist mindestens eine Lichtquelle, die bevorzugt als eine Halbleiterlichtquelle, bspw. eine Leuchtdiode (LED) 31 realisiert sein kann, angeordnet. In der gezeigten Ausführungsform sind an den Einkoppelflächen 27, 29 mehrere Leuchtdioden 31 nebeneinander angeordnet, die in einer zur Zeichenebene der Figur 1 orthogonalen Richtung zueinander versetzt sind. Die Lichtquellen können als Lichtmodul an dem Lichtleiter befestigt sein, oder als separates, gegebenenfalls auch als auswechselbares Moduls derart im Scheinwerfer befestigt sein, dass eine zuverlässige Lichteinkopplung gewährleistet ist. Bei einer als LED 31 ausgebildeten Lichtquelle kann diese auf einem Schaltungsträger im Lichtmodul angeordnet und befestigt sein. Einer oder mehreren der LEDs 31 kann mindestens eine Optik und mindestens ein Kühlkörper zugeordnet sein.

Der Lichtleiter 13 weist in seinem ersten Abschnitt 21 quaderförmige erste Auskoppelelemente 33 auf, die an der ersten Seite 15 des Lichtleiters 13 angeordnet sind und mit dem Lichtleiter 13 einstückig ausgebildet sind. Jedem ersten Auskoppelelement 33 ist ein Reflektor 35 zugeordnet, der an einer von der ersten Einkoppelfläche 27 abgewandten Seite des jeweiligen ersten Auskoppelelements 33 angeordnet ist und als ein vom Lichtleiter 13 getrenntes Teil ausgebildet sein kann. Die ersten Auskoppelelemente 33 weisen an der von der ersten Einkoppelfläche 27 abgewandten Seite jeweils eine erste Auskoppelfläche 36 auf. Die Reflektoren 35 weisen eine entsprechend einer gewünschten Lichtverteilung, des von der Beleuchtungseinrichtung 11 abgegebenen Lichts gewählte Form auf. Es kann sich beispielsweise um die Form eines Paraboloiden oder einem Ellipsoiden handeln. Anstelle der gezeigten ersten Auskoppelelemente 33, die als quaderförmige, vorzugsweise würfelförmige Erhebungen an der ersten Seite 15 des Lichtleiters 13 ausgebildet sind, können die ersten Auskoppelelemente 33 auch eine andere Form, beispielsweise die Form eines Kugelsegments, insbesondere die Form einer Halbkugel aufweisen. Die Form könnte insbesondere auch in der Ansicht von Figur 1 dreieckig sein, wobei die dort eingezeichnete Austrittsfläche des Würfels/ Quaders erhalten bleibt. Grund hierfür ist die Vermeidung von Hinterschnitten.

Was den Aufbau und/oder die Form der ersten Auskoppelelemente 33 und der Reflektoren 35 sowie die Anordnung der ersten Auskoppelelemente 33 am Lichtleiter 13 und relativ zu den Reflektoren 35 angeht, wird ergänzend auf die DE 10 2008 016 764 vollinhaltlich Bezug genommen.

Im zweiten Abschnitt 25 weist der Lichtleiter 13 zweite Auskoppelelemente 37 auf, die an der zweiten Seite 17 des Lichtleiters 13 angeordnet sind. Somit sind die ersten Auskoppelelemente 33 und die zweiten Auskoppelelemente 37 an verschiedenen Seiten 15, 17 des Lichtleiters 13 angeordnet. In der in Figur 1 gezeigten Ausführungsform sind die zweiten Auskoppelelemente 37 als quaderförmige Erhebungen an der zweiten Seite 17 des Lichtleiters 13 realisiert. Jedes zweite Auskoppelelement 37 weist an einer von der zweiten Einkoppelfläche 29 abgewandten Seite eine zweite Auskoppelfläche 39 auf. Im Gegensatz zu den ersten Auskoppelelementen 33 sind den zweiten Auskoppelelementen 37 keine Reflektoren 35 zugeordnet.

Beim Betrieb der Beleuchtungseinrichtung 11 erzeugen die Leuchtdioden 31 Licht, das über die beiden Einkoppelflächen 27, 29 in den Lichtleiter 13 eingekoppelt wird. Lichtstrahlen 41 des über die erste Einkoppelfläche 27 eingekoppelten Lichts werden im Lichtleiter 13 im Wesentlichen entlang einer Lichtausbreitungsrichtung 42 des Lichtleiters, das heißt in Richtung seiner Längsachse 19, mittels Totalreflexion insbesondere an den beiden Seiten 15, 17 und den nicht mit eigenen Bezugszeichen versehenen Verbindungsflächen zwischen den Flächen 15 und 17 weitergeleitet und gelangen in die ersten Auskoppelelemente 33. Die Verbindungsfläche verlaufen parallel zur Zeichenebene, könnten aber zum Beispiel aus Designgründen oder aus Spritzgusstechnischen Gründen abgerundet oder geneigt sein. Die Lichtstrahlen 41 verlassen die ersten Auskoppelelemente 33 über deren erste Auskoppelflächen 36 und treffen auf die den entsprechenden Auskoppelelementen 33 zugeordneten Reflektoren 35. Die Reflektoren 35 lenken die Lichtstrahlen 41 derart um, dass sie durch den Lichtleiter 13 hindurch treten und zumindest annähernd in Hauptlichtabgaberichtung 23 die Beleuchtungseinrichtung 11 verlassen. Zur Funktionsweise der ersten Auskoppelelemente 33, insbesondere ihrem Zusammenwirken mit den Reflektoren 35 wird auf die DE 10 2008 016 764 vollinhaltlich Bezug genommen.

Das über die zweite Einkoppelfläche 29 in den Lichtleiter 13 eingekoppelte Licht wird in Längsrichtung des Lichtleiters 13, das heißt in Richtung seiner Längsachse 19, innerhalb des Lichtleiters 13 mittels Totalreflexion insbesondere an den beiden Seiten 15, 17 und den nicht mit eigenen Bezugszeichen versehenen Verbindungsflächen zwischen den Flächen 15 und 17 weitergeleitet. Die Verbindungsfläche verlaufen parallel zur Zeichenebene, könnten aber zum Beispiel aus Designgründen oder aus Spritzgusstechnischen Gründen abgerundet oder geneigt sein. Innerhalb des Lichtleiters 13 wird das über die zweite Einkoppelfläche 29 eingekoppelte Licht bezüglich der Längsachse 19 in eine Richtung geleitet, die der Richtung entgegengesetzt ist, entlang der das über die erste Einkoppelfläche 27 eingekoppelte Licht geleitet wird. Die Lichtstrahlen 41 des über die zweite Einkoppelfläche 29 eingekoppelten Lichts gelangen zumindest zum Teil in die zweiten Auskoppelelemente 37 und verlassen diese über deren zweiten Auskoppelflächen 39, wobei die Lichtstrahlen 41 an den zweiten Auskoppelflächen 39 gebrochen werden.

Ein Winkel zwischen der gewünschten Hauptlichtabgaberichtung 23 und der Richtung der Lichtstrahlen 41 ist im zweiten Abschnitt 25 relativ gering. Oftmals verlaufen die Lichtstrahlen 41 im zweiten Abschnitt 25 annähernd parallel zur Hauptlichtabgaberichtung 23. Folglich ergibt sich durch die Brechung an den zweiten Auskoppelflächen 39 eine relativ geringe Ablenkung der entsprechenden Lichtstrahlen 41, das heißt zumindest in Teil der Lichtstrahlen 41 behalten ihre Richtung beim Durchtritt durch die zweite Auskoppelflächen 39 zumindest näherungsweise bei.

Sowohl am ersten Abschnitt 21 als auch am zweiten Abschnitt 25 verlassen die Lichtstrahlen 41 die Beleuchtungseinrichtung 11 endgültig über die zweite Seite 17 des Lichtleiters 13. Die zweite Seite 17 bildet somit eine Lichtabgabeseite der Beleuchtungseinrichtung 11. Da die Lichtstrahlen 41 im ersten Abschnitt 21 zunächst über die ersten Auskoppelelemente 33 an der ersten Seite 15 ausgekoppelt werden, um dann von den Reflektoren 35 reflektiert und erneut durch den Lichtleiter 13 geleitet zu werden, sodass sie schließlich aus der zweiten Seite 17 austreten, arbeitet der erste Abschnitt 21 nach dem Prinzip einer indirekten Lichtauskopplung. Dahingegen geben die zweiten Auskoppelelemente 37 die Lichtstrahlen 41 unmittelbar an der zweiten Seite 17 des Lichtleiters 13 ab. Es handelt sich somit um eine direkte Lichtauskopplung. Die Beleuchtungseinrichtung 11 kombiniert die indirekte und die direkte Lichtauskopplung und erzielt hierdurch eine hohe Effizienz, das heißt einen relativ hohen Anteil der Leistung des ausgekoppelten Lichts an dem eingekoppelten Licht. In Bereichen der Lichtleiters 13, in denen ein Winkel zwischen den Seiten 15, 17 und der Hauptlichtabgaberichtung 23 relativ groß ist (das heißt im ersten Abschnitt 21), wird das Licht über die ersten Auskoppelelemente 33 und die Reflektoren 35 indirekt ausgekoppelt. In Bereichen, in denen dieser Winkel relativ gering ist (das heißt im zweiten Abschnitt 25), wird das Licht über die zweiten Auskoppelelemente 37 direkt ausgekoppelt. Es wird hierdurch vermieden, dass einzelne Lichtstrahlen 41, an unerwünschten Stellen der Reflektoren 35 auftreffen und dadurch in eine unerwünschte Richtung reflektiert oder absorbiert werden.

Je nach genauer Ausgestaltung der Beleuchtungseinrichtung 11, nimmt ein Betrachter, der entgegen der Hauptlichtabgaberichtung 23 auf die zweite Seite 17 des Lichtleiters 13 der in Betrieb befindlichen Beleuchtungseinrichtung 11 blickt, einzelne leuchtende Bereiche, beispielsweise in Form von Lichtpunkten oder - flecken war, die sich im Bereich der einzelnen Auskoppelelemente 33, 37 befinden. In diesem Sinne bilden die Auskoppelelemente 33, 37 "virtuelle Lichtquellen".

Ein Grad der Ablenkung der Lichtstrahlen 41 an den einzelnen zweiten Auskoppelflächen 39 lässt sich durch gezielte Gestaltung der Form und/oder der Lage der zweiten Auskoppelflächen 39 beeinflussen. Hierdurch kann die Richtung der einzelnen über die zweiten Auskoppelflächen 39 aus dem Lichtleiter 13 austretenden Lichtstrahlen 41 und somit eine gewünschte Lichtverteilung des von der Beleuchtungseinrichtung 11 abgegebenen Lichts erzielt werden. In den gezeigten Ausführungsformen sind die zweiten Auskoppelflächen 39 derart ausgebildet, dass über die zweiten Auskoppelflächen 39 ausgekoppelte Lichtstrahlen 41 nicht auf andere Auskoppelelemente 33, 37, insbesondere nicht auf das jeweilige benachbarte zweite Auskoppelelement 37, fallen. Im Folgenden werden einzelne Ausführungsformen der Beleuchtungseinrichtung 11 beschrieben, die sich hinsichtlich der genauen Gestaltung der zweiten Auskoppelflächen 39 unterscheiden.

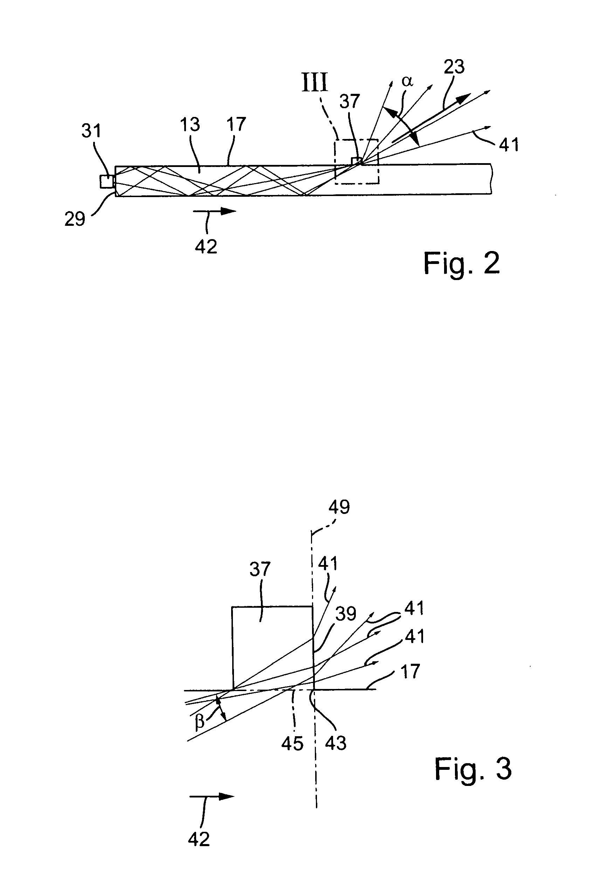

Die Figuren 2 und 3 zeigen den Lichtleiter 13, dessen zweites Auskoppelelement 37 würfelförmig ist. Obwohl der Lichtleiter 13 zumindest abschnittsweise gebogen ist (siehe Figur 1) ist er in den Figuren 2 und 3 der Einfachheit halber gerade dargestellt. Die zweite Auskoppelfläche 39 verläuft zumindest im Wesentlichen orthogonal zu der zweiten Seite 17 des Lichtleiters 13. Im Falle einer Krümmung der ersten Seite 15 verläuft die zweite Auskoppelfläche 39 zumindest im Wesentlichen orthogonal zu einer Tangentialebene durch eine Kante 43, die die zweite Auskoppelfläche 39 mit der zweiten Seite 17 verbindet. Ein erster Öffnungswinkel α eines Lichtbündels, das aus den Lichtstrahlen 41 besteht, die über die zweite Auskoppelfläche 39 ausgekoppelt werden, hängt von einem zweiten Öffnungswinkel β der über eine Eintrittsebene 45 in das zweite Auskoppelelement 37 eintretenden Lichtstrahlen ab. Der zweite Öffnungswinkel β umfasst sämtliche in das zweite Auskoppelelement 37 einfallende Lichtstrahlen 41, die innerhalb des Lichtleiters durch Totalreflexion an dessen beiden Seiten 15, 17 weitergeleitet werden konnten. Der zweite Öffnungswinkel β ergibt sich insbesondere aus der Geometrie des Lichtleiters 13, dessen Brechungsindex und dem Brechungsindex der Umgebung des Lichtleiters 13 (normalerweise Luft).

Insbesondere aus Figur 3 ist ersichtlich, dass ein Teil der Lichtstrahlen 41 an der zweiten Auskoppelfläche 39 nur geringfügig gebrochen wird, wohingegen ein anderer Teil der Lichtstrahlen 41 erheblich gebrochen wird, sodass sie von der zweiten Seite 17 weg - in der Darstellung der Figur 3 nach oben - abgelenkt werden. Hierdurch ergibt sich ein relativ großer erster Öffnungswinkel α des aus dem Lichtleiter 13 austretenden Lichtbündels. Insbesondere ist der erste Öffnungswinkel α größer als der zweite Öffnungswinkel β.

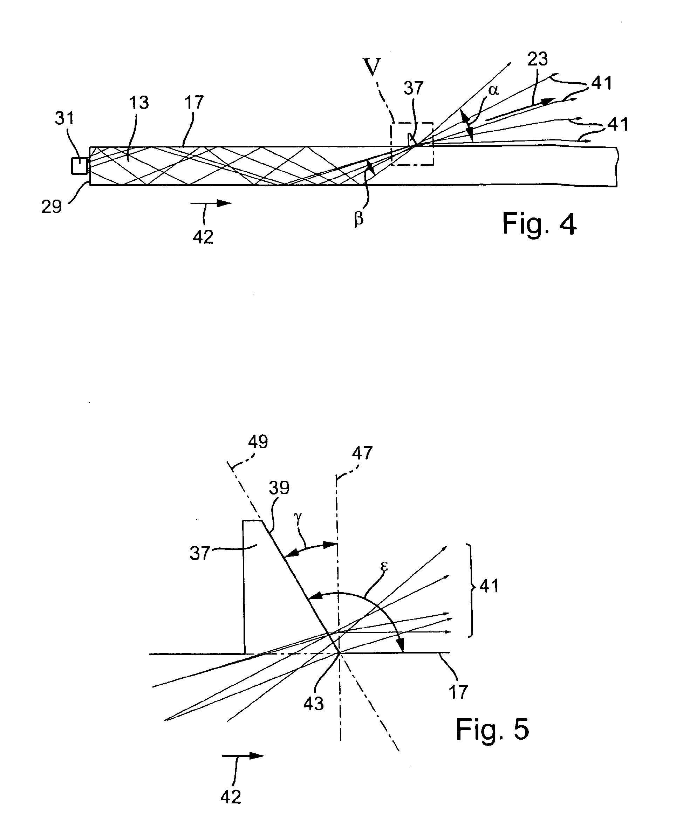

Durch Wahl einer anderen Neigung der zweiten Auskoppelfläche 39 kann ein geringerer Öffnungswinkel α erzielt werden. Eine entsprechend ausgestaltetes zweites Auskoppelelement 37 ist in den Figuren 4 und 5 dargestellt. Auch hier ist der an sich gebogenen Lichtleiter 13 der Einfachheit halber gerade dargestellt. Die zweite Auskoppelfläche 39 des dort dargestellten zweiten Auskoppelelements 37 ist gegenüber einer Orthogonalen 47 zur zweiten Seite 17 bzw. zu der Tangentialebene durch die Kante 43 um einen Neigungswinkel γ = 30° entgegen der Lichtausbreitungsrichtung 42 der Lichtstrahlen 41 im Lichtleiter 13 und entgegen der Hauptlichtabgaberichtung 23 geneigt. Hierdurch ergibt sich an der Kante 43 zwischen der zweiten Auskoppelfläche 39 und der zweiten Seite 17 ein stumpfer Winkel ε > 90°. Abweichend von der gezeigten Ausführungsform kann der Neigungswinkel γ auch einen anderen Wert aufweisen. Der Neigungswinkel γ kann beispielsweise einen Wert zwischen 0° und fast 90° aufweisen. Die Neigung der Auskoppelfläche um einen Winkel γ führt dazu, dass der Winkel α in Figur 4 geringer ist als der Winkel α in Figur 2, falls die beiden Auskoppelelemente mit einem Bündel desselben Öffnungswinkels β bestrahlt werden. Die Neigung der Auskoppelfläche führt also zu einer Bündelverengung, da die steil ankommenden Strahlen nicht mehr wie der oberste Strahl 41 in Figur 3 sehr stark gebrochen werden.

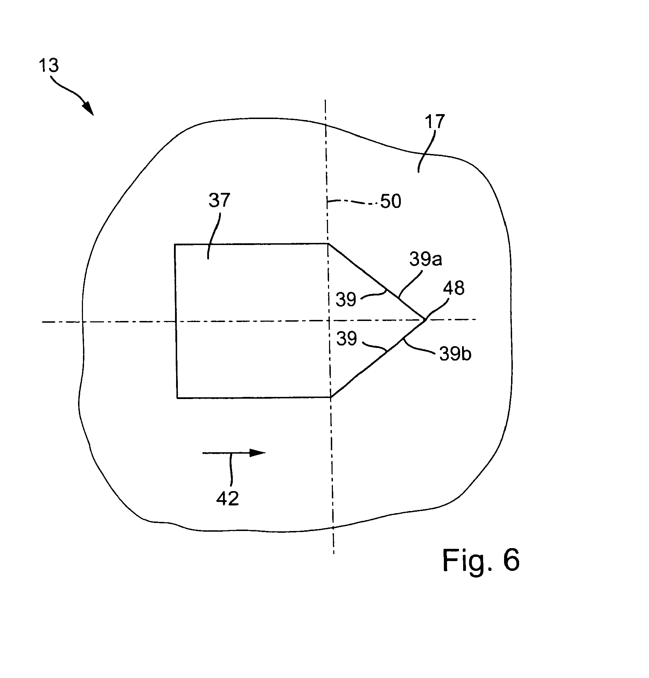

In einer in Figur 6 gezeigten Ausführungsform ist die zweite Auskoppelfläche 39 in zwei Abschnitte 39a und 39b unterteilt. Die beiden Abschnitte 39a und 39b sind gegenüber einer Querebene 50 des Lichtleiters 13, die orthogonal zur zweiten Seite 17 und orthogonal zur Lichtausbreitungsrichtung 42 bzw. zur Längsachse 19 innerhalb des Lichtleiters 13 verläuft, geneigt. Die beiden Abschnitte 39a, 39b grenzen an einer konvexen Vorderkante 48 der zweiten Auskoppelfläche 39 aneinander, sodass sich eine pfleilartige Form der Auskoppelfläche 39 ergibt. Hierdurch wird erreicht, dass die Lichtstrahlen 41 seitlich abgelenkt werden, das heißt beim Durchtritt durch die zweite Auskoppelfläche 39 in der Darstellung der Figur 6 nach oben und/oder unten abgelenkt werden bzw. die Zeichenebene der Figuren 2 bis 5 verlassen.

In der in Figur 6 gezeigten Ausführungsform verläuft die Vorderkante 48 orthogonal zur zweiten Seite 17. Abweichend hiervon kann jedoch auch vorgesehen werden, dass die Auskoppelfläche 39 den Neigungswinkel γ ≠ 0 aufweist. In diesem Fall ist die Vorderkante 48 entgegen der Lichtausbreitungsrichtung 42 geneigt, dass heißt nicht orthogonal zur zweiten Seite 17.

In einer nicht gezeigten Ausführungsform ist die zweite Auskoppelfläche 39 gegenüber der Querebene 50 geneigt, ohne in die Abschnitte 39a, 39b unterteilt zu sein.

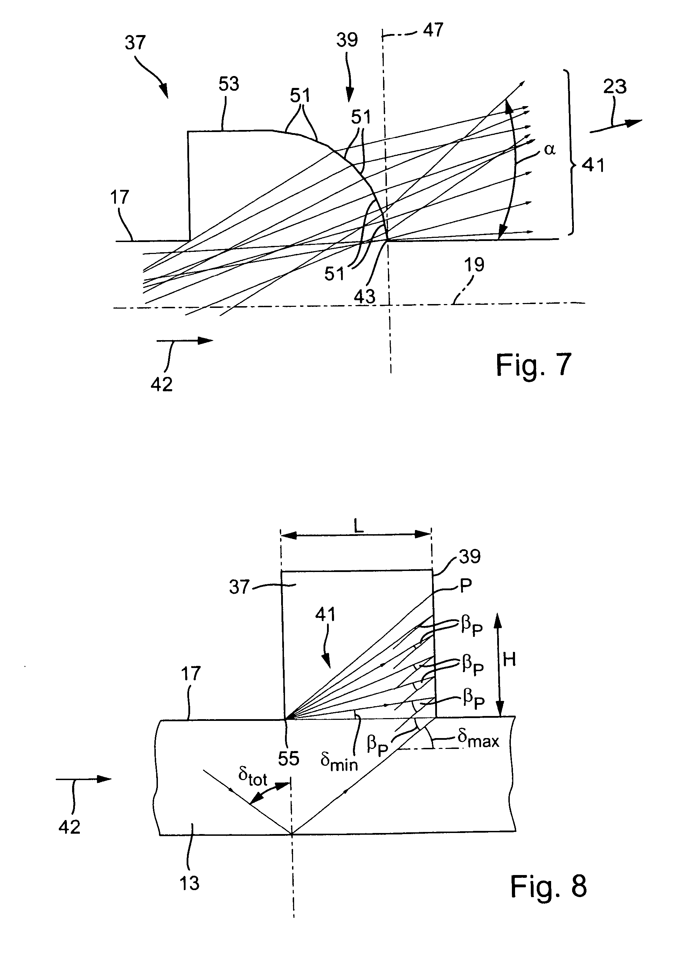

Figur 7 zeigt ein zweites Auskoppelelement 37, dessen zweite Auskoppelfläche 39 mehrere im Längsschnitt des zweiten Auskoppelelements 37 nebeneinander angeordnete, vorzugsweise rechteckige Flächenelemente 51 umfasst, wobei jedes Flächenelement 51 einen anderen Neigungswinkel gegenüber der Orthogonalen 47 aufweist. Benachbarte Flächenelemente 51 grenzen an Kanten aneinander, die orthogonal zu einer von der Orthogonalen 47 und der Längsachse 19 bzw. Lichtausbreitungsrichtung 42 aufgespannten Ebene verlaufen. Dasjenige Flächenelement 51, das unmittelbar an die Kante 43 angrenzt, weist den kleinsten Neigungswinkel aller Flächenelemente 51 auf. Der Neigungswinkel der Flächenelemente 51 nimmt mit deren Abstand zu der Kante 43 zu. Das von der Kante 43 am weitesten entfernte Flächenelement 51 weist folglich den größten Neigungswinkel aller Flächenelemente 51 auf. An das von der Kante 43 am weitesten entferne Flächenelement 51 grenzt eine zur zweiten Seite 17 parallel angeordnete Fläche 53 an. Durch diese Form der zweiten Auskoppelfläche 39 ergibt sich ein besonders keiner Öffnungswinkel α des über die zweite Auskoppelfläche 39 ausgekoppelten Lichtbündels, wodurch eine relativ große Lichtstärke des ausgekoppelten Lichts im Bereich der Hauptlichtabgaberichtung 23 erreicht wird.

Die Neigungswinkel der einzelnen Flächenelemente 51 wird derart gewählt, dass die über die zweite Auskoppelfläche 39 ausgekoppelten Lichtstrahlen 41 eine gewünschte Lichtverteilung bilden. In der gezeigten Ausführungsform umfasst die zweite Auskoppelfläche 39 exemplarisch sechs Flächenelemente 51. Die Auskoppelfläche 39 kann jedoch auch mit einer derart hohen Anzahl von Flächenelementen 51, vorzugsweise unter Anwendung rechnergestützter Verfahren, konstruiert werden, dass sich bei Verwendung üblicher Herstellungsverfahren zum Herstellen des Lichtleiters 13 mitsamt dem zweiten Auskoppelelement 37 eine zumindest näherungsweise glatte Form der zweiten Auskoppelfläche 39 ergibt, bei der quer zur Lichtausbreitungsrichtung 42 und/oder zur Längsachse 19 verlaufende Kanten zwischen den einzelnen Flächenelementen 51 praktisch nicht mehr vorhanden sind.

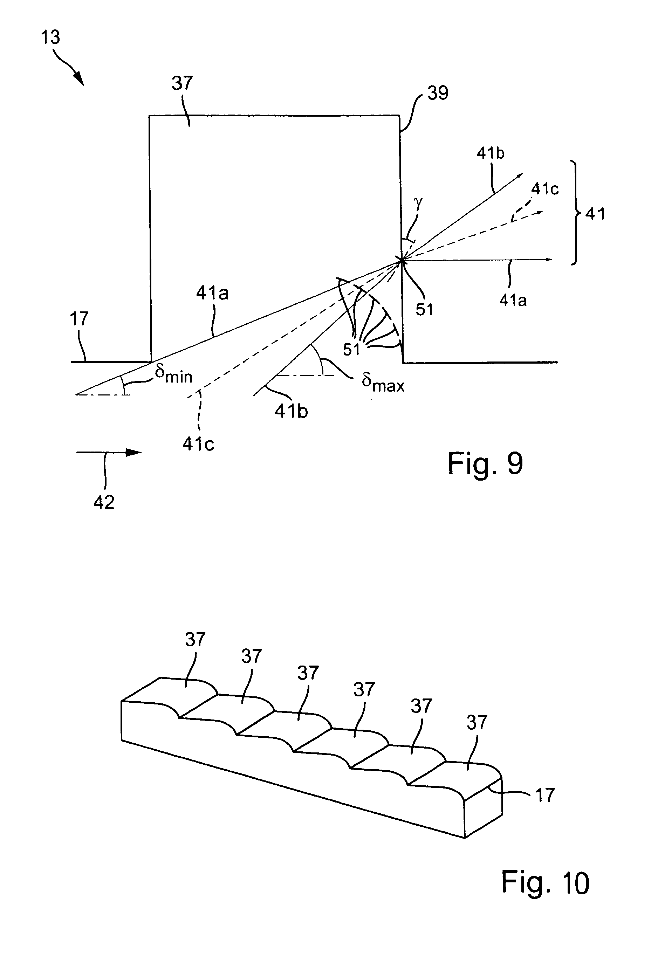

Im Folgenden wird anhand der Figuren 8 und 9 das Konstruktionsprinzip zum Ermitteln der aus den Flächenelementen 51 gebildeten Freiform der zweiten Auskoppelfläche 39 erläutert.

Figur 8 illustriert einen Zusammenhang zwischen einem Abstand H der zweiten Seite 17 von einem Punkt P auf der zweiten Auskoppelfläche 39 und einem ersten Öffnungswinkel des Lichtbündels, das am Punkt P aus dem zweiten Auskoppelelement 37 austritt. Dieser Öffnungswinkel hängt unmittelbar von dem zweiten Öffnungswinkel βp der im Inneren des zweiten Auskoppelelements 37 verlaufenden und auf den Punkt P auftreffenden Lichtstrahlen 41 ab. Der zweite Öffnungswinkel βp wird festgelegt durch einen Winkel δₘₐₓ derjenigen Lichtstrahlen 41, die innerhalb des Lichtleiters 13 am steilsten verlaufen und einen Winkel δₘᵢₙ derjenigen Lichtstrahlen 41, die innerhalb des zweiten Auskoppelelements 37 am flachsten verlaufen, das heißt β_{P} = δₘₐₓ - δₘᵢₙ. Bei den letztgenannten Lichtstrahlen 41 handelt es sich um diejenigen Lichtstrahlen 41, die gerade noch an einer von der zweiten Auskoppelfläche 39 abgewandten Hinterkante 55 zwischen dem zweiten Auskoppelelements 37 und der zweiten Seite 17 vorbeikommen können. Die beiden Winkel δₘₐₓ und δₘᵢₙ beziehen sich auf die Horizontale der Figur 8, das heißt auf eine Ebene parallel zur zweiten Seite 17. Der Winkel δₘᵢₙ ergibt sich aus einer Länge L des zweiten Auskoppelelements 37 und dem Abstand H. Es gilt δₘᵢₙ = arctan(H/L). Der Winkel δₘₐₓ ist der Komplementärwinkel zum Grenzwinkel der Totalreflexion δₜₒₜ des Lichtleiters 13, das heißt δₘₐₓ = 90° - δₜₒₜ.

An demjenigen Punkt P, bei dem die beiden Winkel gleich sind, das heißt wenn δₘᵢₙ = δₘₐₓ gilt, ist der zweite Öffnungswinkel βp = δₘₐₓ - δₘᵢₙ = 0. Es tritt nur ein Lichtstrahl 41 auf diesem Punkt P auf. In der Darstellung der Figur 8 oberhalb dieses Punktes P treffen keine Lichtstrahlen 41 auf die zweite Auskoppelfläche 39, das heißt die zweite Auskoppelfläche 39 ist oberhalb dieses Punktes P "abgeschattet".

Unter Berücksichtigung insbesondere der oben beschriebenen optischen Eigenschaften lässt sich das zweite Auskoppelelement 37 so konstruieren, dass die aus dessen zweiter Auskoppelfläche 39 austretenden Lichtbündel eine gewünschte Ausbreitungsrichtung und einen gewünschten Öffnungswinkel, insbesondere einen relativ kleinen Öffnungswinkel, aufweisen. Hierzu wird zunächst - wie in Figur 9 schematisch dargestellt - die zweite Auskoppelfläche 39 eines gedachten rechteckigen oder würfelförmigen zweiten Auskoppelelements 37 in mehrere kleine Flächenelemente 51 unterteilt. Anschließend wird der Neigungswinkel γ und die Position der Flächenelemente 51 festgelegt.

In Figur 9 ist ein erster Randstrahl 41a, der den minimalen Einfallswinkel δₘᵢₙ in das betrachtete Flächenelement 51 aufweist, und ein zweiter Randstrahl 41b, der den maximalen Einfallswinkel δₘₐₓ in das betrachtete Flächenelement 51 aufweist, eingezeichnet. Ferner ist ein mittlerer Lichtstrahl 41c eingetragen, der im Innern des zweiten Auskoppelelements 37 einer Winkelhalbierenden bezüglich der beiden Randstrahlen 41a, 41b entspricht.

Der Neigungswinkel γ des betrachteten Flächenelements 51 wird so festgelegt, dass das durch die beiden Randstrahlen 41a, 41b aufgespannte Lichtbündel von dem betrachteten Flächenelement 51 in eine gewünschte Richtung gebrochen wird. In der Darstellung der Figur 9 soll der erste Randstrahl 41a nach seinem Durchtritt durch das betrachtete Flächenelement 51 parallel zur zweiten Seite 17 des Lichtleiters 13 liegen. Dies hat zur Folge, dass das gesamte austretende Lichtbündel von der zweiten Seite 17 weg gebrochen wird. Nachdem der Neigungswinkel γ des Flächenelements 51 festgelegt worden ist, wird das Flächenelement 51 entlang seines mittleren Lichtstrahls 41c zur zweiten Seite 17 hin verschoben, sodass sich eine geschlossene, konvexe Form des aus den Flächenelementen 51 zusammengesetzten zweiten Auskoppelfläche 39 ergibt. Die Lage der insgesamt sechs Flächenelemente 51 ist ebenfalls in Figur 9 dargestellt.

Im Allgemeinen bestehen hohe Freiheitsgrade beim Entwurf des zweiten Auskoppelelement 37. Somit kann die Form des zweiten Auskoppelelements 37 in weiten Grenzen variiert werden. Beispielsweise kann der Lichtleiter 13 - wie in Figur 10 dargestellt - an seiner zweiten Seite 17 nebeneinander angeordnete schuppenförmige zweite Auskoppelelemente 37 aufweisen. Darüber hinaus ist auch denkbar, dass in Abhängigkeit von einem für die Beleuchtungseinrichtung 11 in einem Fahrzeug vorgesehenen Bauraum und in Abhängigkeit von einer gewünschten Lichtfunktion der Beleuchtungseinrichtung 11 die Beleuchtungseinrichtung lediglich die ersten Auskoppelelemente 33 oder lediglich die zweiten Auskoppelelemente 37 aufweist. Schließlich kann die Beleuchtungseinrichtung 11 auch zur Raumbeleuchtung, beispielsweise zur Beleuchtung eines Innenraums eines Kraftfahrzeugs verwendet werden.

## Patentansprüche

1. Beleuchtungseinrichtung (11) für ein Kraftfahrzeug, umfassend einen transparenten Lichtleiter (13), mindestens ein in den Lichtleiter (13) eingeformtes erstes Auskoppelelement (33) und mindestens einen Reflektor (35), der dem ersten Auskoppelelement (33) zum Reflektieren von mittels des ersten Auskoppelelements (33) aus dem Lichtleiter (13) ausgekoppelten Licht zugeordnet ist, wobei der Reflektor (35) derart ausgerichtet und/oder geformt ist, dass zumindest ein Teil des von dem Reflektor (35) reflektierten Lichts den Lichtleiter (13) durchstrahlt, und wobei in den Lichtleiter (13) mindestens ein zweites Auskoppelelement (37) zum Auskoppeln von Licht aus dem Lichtleiter (13) eingeformt ist, das derart ausgerichtet und/oder geformt ist, dass das mittels des zweiten Auskoppelelements (37) ausgekoppelte Licht den Lichtleiter (13) endgültig verlässt, **dadurch gekennzeichnet, dass** das erste Auskoppelelement (33) an einer ersten Seite (15) des Lichtleiters (13) angeordnet ist und das zweite Auskoppelelement (37) an einer zweiten Seite (17) des Lichtleiters (13), die der ersten Seite (15) gegenüber liegt, angeordnet ist und dass der Lichtleiter (13) zumindest abschnittsweise derart gebogen ist, dass ein Winkel der zweiten Seite bezogen auf eine Hauptlichtabgaberichtung (23) entlang einer Längsachse (19) des Lichtleiters (13) variiert und dass das erste Auskoppelelement (33) sich in einem ersten Abschnitt (21) des Lichtleiters und das zweite Auskoppelelement sich in einem zweiten Abschnitt (25) des Lichtleiters (13) befindet, wobei der Winkel innerhalb des ersten Abschnitts (21) größer ist als innerhalb des zweiten Abschnitts (25).

2. Beleuchtungseinrichtung (11) nach Anspruch 1, **dadurch gekennzeichnet, dass** der Lichtleiter (13) aus Kunststoffmaterial, insbesondere Polymethylmethacrylat, besteht und/oder insgesamt plattenförmig ist.

3. Beleuchtungseinrichtung (11) nach einem der vorhergehenden Ansprüche, **dadurch gekennzeichnet, dass** der Lichtleiter (13) eine erste Einkoppelfläche (27) zum Einkoppeln von Licht, das über eine erste Auskoppelfläche (36) des ersten Auskoppelelements (33) auskoppelbar ist, und/oder eine zweite Einkoppelfläche (29) zum Einkoppeln von Licht, das über eine zweite Auskoppelfläche (39) des zweiten Auskoppelelements (37) auskoppelbar ist, aufweist, wobei die beiden Einkoppelflächen (27, 29) bezüglich der Längsachse (19) des Lichtleiters zueinander versetzt sind.

4. Beleuchtungseinrichtung (11) nach einem der vorhergehenden Ansprüche, **dadurch gekennzeichnet, dass** das die zweite Auskoppelfläche (39) zumindest im Wesentlichen orthogonal zu der zweiten Seite (17) des Lichtleiters (13) verläuft.

5. Beleuchtungseinrichtung (11) nach einem der vorhergehenden Ansprüche, **dadurch gekennzeichnet, dass** die zweite Auskoppelfläche (39) gegenüber der zweiten Seite (17) des Lichtleiters (13) derart geneigt ist, dass die zweite Auskoppelfläche (39) und die zweite Seite (17) außerhalb des Lichtleiters (13) einen stumpfen Winkel (ε) einschließen.

6. Beleuchtungseinrichtung (11) nach einem der vorhergehenden Ansprüchen, **dadurch gekennzeichnet, dass** zumindest ein Abschnitt (39a, 39b) der Auskoppelfläche (39) gegenüber einer zur zweiten Seite (17) des Lichtleiters (13) und zu einer Lichtausbreitungsrichtung (42) im Lichtleiter (13) orthogonalen Querebene (50) des Lichtleiters (13) geneigt ist.

7. Beleuchtungseinrichtung (11) nach Anspruch 6, **dadurch gekennzeichnet, dass** zwei an einer konvexen Vorderkante (48) der Auskoppelfläche (39) aneinander angrenzende Abschnitte (39a, 39b) in zueinander entgegengesetzten Richtungen gegenüber der Querebene (50) geneigt sind.

8. Beleuchtungseinrichtung (11) nach einem der vorhergehenden Ansprüche, **dadurch gekennzeichnet, dass** die zweite Auskoppelfläche (39) eine insgesamt unebene Form zum Beeinflussen der Richtung von über die zweite Auskoppelfläche (39) auszukoppelnden Lichtstrahlen (41) und/oder zum Beeinflussen eines Öffnungswinkels (α) eines von den auszukoppelnden Lichtstrahlen (41) gebildeten Strahlenbündels aufweist.

9. Beleuchtungseinrichtung (11) nach Anspruch 8, **dadurch gekennzeichnet, dass** die insgesamt unebene zweite Auskoppelfläche (39) aus mehreren nebeneinander angeordneten ebenen Flächenelementen (51) gebildet ist, wobei ein Neigungswinkel zumindest eines dieser Flächenelemente (51) bezogen auf eine Tangentialebene der zweiten Seite (17) an einer Kante (43), an der die zweite Auskoppelfläche (39) an die zweite Seite (17) grenzt, sich von einem entsprechenden Neigungswinkel zumindest eines anderen Flächenelements (51) unterscheidet.

10. Beleuchtungseinrichtung (11) nach Anspruch 9, **dadurch gekennzeichnet, dass** der Neigungswinkel der einzelnen Flächenelemente (51), mit zunehmenden Abstand zu der zweiten Seite (17) abnimmt, sodass das zweite Auskoppelelement (37) an der zweiten Auskoppelfläche (39) insgesamt eine konvexe Form aufweist.

11. Beleuchtungseinrichtung (11) nach Anspruch 9 oder 10, **dadurch gekennzeichnet, dass** die zweite Auskoppelfläche (39) aus einer derart hohen Anzahl der nebeneinander angeordneten Flächenelemente (51) konstruiert ist, dass die hergestellte zweite Auskoppelfläche (39) zumindest annähernd eine glatte, kantenfreie Form aufweist.

## Claims

1. An illumination device (11) for a motor vehicle comprising:
a transparent light guide (13); at least a first decoupling element (33) formed into said light guide (13); and at least one reflector (35), which is assigned to said first decoupling element (33) for reflection of light coupled-out by said first decoupling element (33), wherein the reflector (35) is aligned and formed in such a way that at least a portion of said light reflected by said reflector (35) irradiates through said light guide (13); and wherein at least one second decoupling element (37) is formed in said light guide (13) for coupling-out of light from said light guide (13), which second decoupling element is aligned and formed in such a way that light coupled-out by said second decoupling element (37) ultimately exits said light guide (13), **characterised in that** said first decoupling element (33) is arranged on a first side (15) of said light guide (13) and said second decoupling element (37) is arranged on a second side (17) of said light guide (13), said second side (17) facing said first side (15), wherein said light guide (13) is at least in sections curved such that an angle of said second side varies with reference to a main direction of light emission (23) along a longitudinal axis (19) of said light guide (13), and wherein said first decoupling element (33) is located in a first section (21) of said light guide (13), and said second decoupling element is located in a second section (25) of said light guide (13), wherein the angle within said first section (21) is larger than within said second section (25).

2. Illumination device (11) according to claim 1, **characterised in that** said light guide (13) includes plastic, in particular includes polymethylmethacrylate, and is plate-shaped.

3. Illumination device (11) according to any of the preceding claims, **characterised in that** said light guide (13) comprises a first light-input surface (27) for coupling-in of light that can be decoupled via a first light-output surface (36) of said first decoupling element (33) and/or a second light-input surface (29) for coupling-in of light that can be decoupled via a second light-output surface (39) of said second decoupling element (37) and said light-input surfaces (27, 29) are offset to one another with reference to said longitudinal axis (19) of said light guide (13).

4. Illumination device (11) according to any of the preceding claims, wherein said second light-output surface (39) runs at least substantially orthogonally to said second side (17) of said light guide (13).

5. Illumination device (11) according to any of the preceding claims, **characterised in that** said second light-output surface (39) is inclined in relation to said second side (17) of said light guide (13) in such a way that said second light-output surface (39) and second side (17) outside of said light guide (13) enclose an obtuse angle (ε).

6. illumination device (11) according to any of the preceding claims, **characterised in that** said at least a section (39a, 39b) of said second light-output surface (39) is inclined in relation to a transverse plane (50) of said light guide (13) orthogonal to said second side (17) of said light guide (13) and to a direction of light diffusion (42) in said light guide (13).

7. Illumination device (11) according to claim 6, **characterised in that** two sections (39a, 39b) adjoining one another at a convex front edge (48) of said second light-output surface (39) are inclined in relation to said transverse plane (50) in opposing directions.

8. Illumination device (11) according to any of the preceding claims, **characterised in that** said second light-output surface (39) exhibits an overall uneven shape for influencing a direction of light beams (41) to be coupled-out via said second light-output surface (39) and/or for influencing an opening angle of a bundle of beams formed by said light beams (41) to be coupled-out.

9. Illumination device (11) according to claim 8, **characterised in that** said second light-output surface (39) is formed from a plurality of plane-surface elements (51) arranged next to one another and an angle of inclination of at least one of said plane-surface elements (51) with reference to a tangent plane of said second side (17) at one edge (43) differs from a corresponding angle of inclination of at least one of other said plane-surface elements (51).

10. Illumination device (11) according to claim 9, **characterised in that** said angle of inclination of said plane-surface element (51) decreases with increasing distance to said second side (17) so that said second decoupling element (37) on said second light-output surface (39) exhibits a convex shape.

11. Illumination device (11) according to claim 9 or 10, **characterised in that** said second light-output surface (39) is constructed from such a high number of surface elements (51) that are arranged side by side such that said second light-output surface (39) exhibits substantially a smooth, edge-free shape.

## Revendications

1. Dispositif d'éclairage (11) pour un véhicule automobile comprenant un guide d'ondes optiques (13) transparent, au moins un premier élément de découplage (33) moulé dans le guide d'ondes optiques (13) et au moins un réflecteur (35) qui est associé au premier élément de découplage (33) pour réfléchir de la lumière découplée hors du guide d'ondes optiques (13) au moyen du premier élément de découplage (33), le réflecteur (35) étant orienté et/ou conformé de telle sorte qu'au moins une partie de la lumière réfléchie par le réflecteur (35) traverse le guide d'ondes optiques (13) et dans le guide d'ondes optiques (13) étant moulé au moins un deuxième élément de découplage (37) pour découpler de la lumière hors du guide d'ondes optiques (13) qui est orienté et/ou conformé de telle sorte que la lumière découplée au moyen du deuxième élément de découplage (37) quitte définitivement le guide d'ondes optiques (13), **caractérisé en ce que** le premier élément de découplage (33) est placé sur un premier côté (15) du guide d'ondes optiques (13) et le deuxième élément de découplage (37) est placé sur un deuxième côté (17) du guide d'ondes optiques (13) qui est opposé au premier côté (15) et **en ce que** le guide d'ondes optiques (13) est recourbé au moins par tronçons, de telle sorte qu'un angle du deuxième côté varie le long d'un axe longitudinal (19) du guide d'ondes optiques (13) en ce qui concerne une direction principale (23) de distribution de la lumière et que le premier élément de découplage (33) se trouve dans un premier tronçon (21) du guide d'ondes optiques et que le deuxième élément de découplage se trouve dans un deuxième tronçon (25) du guide d'ondes optiques (13), l'angle à l'intérieur du premier tronçon (21) étant plus grand qu'à l'intérieur du deuxième tronçon (25).

2. Dispositif d'éclairage (11) selon la revendication 1, **caractérisé en ce que** le guide d'ondes optiques (13) est constitué de matière plastique, notamment de polyméthacrylate de méthyle, et/ou est entièrement en forme de plaque.

3. Dispositif d'éclairage (11) selon l'une quelconque des revendications précédentes, **caractérisé en ce que** le guide d'ondes optiques (13) comporte une première surface d'injection (27) pour injecter de la lumière qui est susceptible d'être découplée par l'intermédiaire d'une première surface de découplage (36) du premier élément de découplage (33) et/ou une deuxième surface d'injection (29) pour injecter de la lumière qui est susceptible d'être découplée par l'intermédiaire d'une deuxième surface de découplage (39) du deuxième élément de découplage (37), les deux surfaces d'injection (27, 29) étant décalées l'une par rapport à l'autre relativement à l'axe longitudinal (19) du guide d'ondes optiques.

4. Dispositif d'éclairage (11) selon l'une quelconque des revendications précédentes, **caractérisé en ce que** la deuxième surface de découplage (39) s'étend de manière au moins sensiblement orthogonale par rapport au deuxième côté (17) du guide d'ondes optiques (13).

5. Dispositif d'éclairage (11) selon l'une quelconque des revendications précédentes, **caractérisé en ce que** la deuxième surface de découplage (39) est inclinée par rapport au deuxième côté (17) du guide d'ondes optiques (13) de telle sorte que la deuxième surface de découplage (39) et le deuxième côté (17) forment un angle obtus (ε) à l'extérieur du guide d'ondes optiques (13).

6. Dispositif d'éclairage (11) selon l'une quelconque des revendications précédentes, **caractérisé en ce qu'**au moins un tronçon (39a, 39b) de la surface de découplage (39) est incliné par rapport à un plan transversal (50) du guide d'ondes optiques (13) orthogonal par rapport au deuxième côté (17) du guide d'ondes optiques (13) et à une direction de diffusion de la lumière (42) dans le guide d'ondes optiques (13).

7. Dispositif d'éclairage (11) selon la revendication 6, **caractérisé en ce que** deux tronçons (39a, 39b) mutuellement adjacents sur une arête antérieure convexe (48) de la surface de découplage (39) sont inclinés dans des directions opposées par rapport au plan transversal (50).

8. Dispositif d'éclairage (11) selon l'une quelconque des revendications précédentes, **caractérisé en ce que** la deuxième surface de découplage (39) a une forme globalement inégale pour influencer la direction de rayons lumineux (41) devant être découplés par l'intermédiaire de la deuxième surface de découplage (39) et/ou pour influencer un angle d'ouverture (α) d'un faisceau lumineux formé par les rayons lumineux (41) à découpler.

9. Dispositif d'éclairage (11) selon la revendication 8, **caractérisé en ce que** la deuxième surface de découplage (39) globalement inégale est formée de plusieurs éléments de surface (51) plans placés côte à côte, en rapport à un plan tangentiel du deuxième côté (17), sur une arête (43) sur laquelle la deuxième surface de découplage (39) est limitrophe du deuxième côté (17), un angle d'inclinaison d'au moins l'un de ces éléments de surface (51) se différenciant d'un angle d'inclinaison correspondant d'au moins un autre élément de surface (51).

10. Dispositif d'éclairage (11) selon la revendication 9, **caractérisé en ce que** l'angle d'inclinaison des éléments de surface individuels (51) décroît au fur et à mesure que l'écart par rapport au deuxième côté (17) augmente, de sorte que le deuxième élément de découplage (37) sur la deuxième surface de découplage (39) présente globalement une forme convexe.

11. Dispositif d'éclairage (11) selon la revendication 9 ou 10, **caractérisé en ce que** la deuxième surface de découplage (39) est construite à partir d'un nombre si élevé d'éléments de surface (51) placés côte à côte que la deuxième surface de découplage (39) créée présente au moins approximativement une forme lisse, sans arête.
